# EUROPÄISCHE PATENTANMELDUNG

(11) **EP 4 574 791 A1**
(43) Veröffentlichungstag der Anmeldung: **25.06.2025**
(21) Anmeldenummer: 23219313.6
(22) Anmeldetag: 21.12.2023
(51) Int. Cl.: C04B 26/16, C09J 165/00, F16B 13/14

(54) **VERWENDUNG VON TRIS-[(METHACRYLOYLOXY)-ALKYL]-ISOCYANURSÄUREN IN REAKTIVHARZ-ZUSAMMENSETZUNGEN SOWIE IN DARAUS ERHALTENEN MEHRKOMPONENTEN-REAKTIVHARZ-SYSTEMEN**

(71) Anmelder: Hilti Aktiengesellschaft, 9494 Schaan (LI)
(72) Erfinder: Martin-Lasanta, Ana-Maria, 35398 Gießen (DE); Bürgel, Thomas, 86899 Landsberg (DE); Gaefke, Gerald, 87600 Kaufbeuren (DE)
(74) Vertreter: Hilti Aktiengesellschaft Corporate Intellectual Property

(57) **Zusammenfassung**

Die vorliegende Erfindung betrifft die Verwendung von Tris-[(methacryloyloxy)-alkyl]-isocyanursäuren als radikalisch härtbare Verbindungen in Reaktivharz-Zusammensetzungen sowie in daraus erhaltenen Mehrkomponenten-Reaktivharz-Systemen. Durch den Einsatz von Tris-[(methacryloyloxy)-alkyl]-isocyanursäuren als radikalisch härtbare Verbindungen in der Reaktivharzkomponente des Mehrkomponenten-Reaktivharz-Systems kann die Leistungsfähigkeit einer Befestigungsanordnung bei erhöhten Temperaturen verbessert werden, wobei die Befestigungsanordnung einen aus dem erfindungsgemäßen Mehrkomponenten-Reaktivharz-System hergestellten Reaktivharzmörtel und ein Befestigungsmittel umfasst.

## Beschreibung

Die vorliegende Erfindung betrifft die Verwendung von Tris-[(methacryloyloxy)-alkyl]-isocyanursäuren als radikalisch härtbare Verbindungen in Reaktivharz-Zusammensetzungen sowie in daraus erhaltenen Mehrkomponenten-Reaktivharz-Systemen. Durch den Einsatz von Tris-[(methacryloyloxy)-alkyl]-isocyanursäuren als radikalisch härtbare Verbindungen in der Reaktivharzkomponente des Mehrkomponenten-Reaktivharz-Systems kann die Leistungsfähigkeit einer Befestigungsanordnung bei erhöhten Temperaturen verbessert werden, wobei die Befestigungsanordnung einen aus dem erfindungsgemäßen Mehrkomponenten-Reaktivharz-System hergestellten Reaktivharzmörtel und ein Befestigungsmittel umfasst.

### Hintergrund

Die Verwendung von chemischen Befestigungsmitteln auf Basis radikalisch härtbarer Reaktivharze ist seit langem bekannt. Im Bereich der Befestigungstechnik hat sich die Verwendung von Reaktivharzmischungen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente (die Reaktivharzkomponente) die Reaktivharzmischung und die andere Komponente (die Härterkomponente) das Härtungsmittel enthält. Andere, übliche Bestandteile, wie beispielsweise Füllmittel, Beschleuniger, Stabilisatoren, Lösungsmittel und Reaktivverdünner, können in der einen und/oder der anderen Komponente enthalten sein.

Durch Vermischen der beiden Komponenten wird dann durch Radikalbildung die Härtungsreaktion, d.h. die Polymerisation, in Gang gebracht und das Harz zum Duromeren gehärtet.

An Reaktivharze werden in der chemischen Befestigungstechnik, z.B. bei Verwendung als Dübelmassen, hohe Anforderungen gestellt, da bei dieser Anwendung die mechanische Stärke und die Haftung an mineralischen Untergründen und auch an anderen Untergründen, wie Glas, Stahl und dergleichen, sehr gut sein müssen. Eine Größe für die Beurteilung der mechanischen Stärke und der Hafteigenschaften ist die sogenannte Versagensverbundspannung. Eine niedrige Versagensverbundspannung weist auf geringe Zugfestigkeit und geringe Haftung am Untergrund hin. Bei Verwendung von Reaktivharzmassen als organisches Bindemittel, insbesondere für Mörtel- und/oder Dübelmassen, müssen auch unter strengen Bedingungen hohe Versagensverbundspannungen erreicht werden.

Als Reaktivharze oder Basisharze werden in konventionellen Reaktivharz-Systemen üblicherweise funktionalisierte Acrylate eingesetzt. Die WO 2012/158887 A1 beispielsweise beschreibt Dübelmassen mit einem funktionalisierten Acrylat als Basisharz.

Acrylate weisen jedoch etliche Nachteile auf. Dem Fachmann ist bekannt, dass Acrylate im Vergleich zu Methacrylaten deutlich schneller reagieren. Dies ist beispielsweise in Ballard N., Asua J. M., "Radical polymerization of acrylic monomers: An overview", Progress in Polymer Science, Vol. 79, 2018, 40-60 beschrieben.

Zudem ist es bekannt, dass die Leistungsfähigkeit von chemischen Mörteln durch die Temperatur nachteilig beeinflusst wird. Acrylate weisen beispielsweise eine niedrigere Glasübergangstemperatur T_{g} im Vergleich zu Methacrylaten auf. Bei erhöhter Temperatur, also bei erhöhten Temperaturen im eingebauten Zustand, wie etwa bei +80°C, fällt die Leistungsfähigkeit der chemischen Mörtel ab. Dies ist beispielsweise in Cook, R. A., Konz, R. C., "Factors Influencing Bond Strength of Adhesive Anchors", ACI Structural Journal, 2001, 98, 76-86 und in Lahouar, M., Caron, J.-F., Pinoteau, N., Forêt, G., Benzarti, K., "Mechanical behavior of adhesive anchors under high temperature exposure: experimental investigation", International Journal of Adhesion and Adhesives, 2017, 78, 200-211 beschrieben. Eine Erhöhung der Temperatur führt zu einer Schwächung des polymeren Netzwerks und damit auch zu einer Schwächung des chemischen Mörtels. Folglich nimmt die Tragfähigkeit des chemischen Mörtels signifikant ab.

Ein weiterer Nachteil von Acrylaten besteht darin, dass sie dazu neigen, unter basischen Bedingungen zu hydrolysieren, wie dies in Mallik K.L., Das M.N., Naturwissenschaften 51, 37 (1964) beschrieben ist. Die daraus resultierenden ausgehärteten Mörtel weisen somit eine geringe Stabilität unter basischen Bedingungen auf. Derartige basische Bedingungen können beispielsweise auftreten oder sich entwickeln, wenn eine chemische Befestigung von Verankerungsmitteln in oder an Untergründen erfolgt, die Calciumoxid enthalten, wie z.B. Beton oder Gips. Beton z.B. ist dadurch charakterisiert, dass er einen Oberflächen-pH-Wert von 13.5 aufweist, wie dies in Müller, B. et al. RILEM Technical Letters (2018) 3, 39-45 beschrieben ist.

Darüberhinaus sind einige Vertreter der Gruppe der Acrylate gesundheitsgefährdend und daher kennzeichnungspflichtig. Dies führt dazu, dass Reaktivharz-Systeme, die diese Verbindungen in einer bestimmten Menge enthalten, ebenfalls kennzeichnungspflichtig werden, das wiederum zu einer geringeren Anwenderakzeptanz des Produkts führt.

Es besteht daher Bedarf, eine verbesserte Leistungsfähigkeit einer chemischen Befestigungsanordnung bei erhöhten Temperaturen, d.h. ab einer Temperatur von etwa +80°C, zu ermöglichen, wobei gleichzeitig die Reaktivität des verwendeten Reaktivharz-Systems bei Raumtemperatur aufrechterhalten werden soll, sowie eine mögliche Gesundheitsgefährdung sowohl bei der Herstellung und Verpackung als auch der Verarbeitung des Reaktivharz-Systems zu verringern.

### Aufgabe der Erfindung

Die Aufgabe der Erfindung ist es daher, die Leistungsfähigkeit einer chemischen Befestigungsanordnung bei erhöhten Temperaturen, d.h. ab einer Temperatur von etwa +80°C, zu verbessern. Gleichzeitig soll das verwendete Reaktivharz-System eine den herkömmlichen Systemen vergleichbare Reaktivität bei Raumtemperatur aufweisen, sowie eine mögliche Gesundheitsgefährdung sowohl bei der Herstellung und Verpackung als auch der Verarbeitung des Reaktivharz-Systems zu verringern.

### Gegenstand der Erfindung

Es hat sich nunmehr überraschend gezeigt, dass die Aufgabe der Erfindung dadurch gelöst werden kann, dass man in die Reaktivharzkomponente Tris-[(methacryloyloxy)-alkyl]-isocyanursäuren einarbeitet, welche durch kovalente Bindung entweder direkt das ausgehärtete Netzwerk bilden oder zusammen mit weiteren Reaktivharzen in das ausgehärtete Netzwerk eingebunden werden. Ohne an eine bestimmte Theorie gebunden zu sein, wird vermutet, dass aufgrund der höheren Anzahl an funktionellen Gruppen in den Tris-[(methacryloyloxy)-alkyl]-isocyanursäuren eine höhere Quervernetzung zwischen den Harzbestandteilen der Reaktivharzkomponente erfolgt, welche zu einer höheren Vernetzungsdichte führt. Tris-[(methacryloyloxy)-alkyl]-isocyanursäuren sind räumlich sehr anspruchsvolle Moleküle, so dass nicht nur die Rigität der Isocyanurat-Einheit, sondern auch sterische Effekte dazu beitragen können, dass das ausgehärtete Netzwerk eine höhere Stabilität aufweist.

Gegenstand der Erfindung ist daher die Verwendung von mindestens einer Tris-[(methacryloyloxy)-alkyl]-isocyanursäure als radikalisch härtbare Verbindung in einer Reaktivharz-Zusammensetzung für die chemische Befestigung von Verankerungsmitteln in Bohrlöchern oder zum baulichen Kleben gemäß Anspruch 1.

Ein weiterer Gegenstand der Erfindung ist gemäß Anspruch 9 die Verwendung von mindestens einer Tris-[(methacryloyloxy)-alkyl]-isocyanursäure als radikalisch härtbare Verbindung in einem Mehrkomponenten-Reaktivharz-System für die chemische Befestigung von Verankerungsmitteln in Bohrlöchern oder zum baulichen Kleben, wobei das Mehrkomponenten-Reaktivharz-System eine Reaktivharz-Zusammensetzung als Komponente (A), die die mindestens eine Tris-[(methacryloyloxy)-alkyl]-isocyanursäure enthält, und eine Härterkomponente (B) umfasst.

Die Unteransprüche betreffen bevorzugte Ausführungsformen dieser Erfindungsgegenstände.

Überraschenderweise wurde gefunden, dass es durch die Anwendung dieser Erfindung möglich ist, Reaktivharzmörtel mit hoher Leistungsfähigkeit bei Temperaturen ab +80°C bereitzustellen, wobei gleichzeitig die Reaktivität des verwendeten Reaktivharz-Systems bei Raumtemperatur aufrechterhalten wird.

Insbesondere wurde überraschend gefunden, dass die Versagensverbundspannung der erfindungsgemäßen gehärteten Reaktivharz-Systeme bei Temperaturen ab +80°C verbessert werden konnte gegenüber vergleichbaren Reaktivharz-Systemen aus dem Stand der Technik, die keine Tris-[(methacryloyloxy)-alkyl]-isocyanursäuren enthielten.

### Detaillierte Beschreibung der Erfindung

Im Sinne der Erfindung bedeuten die verwendeten Begriffe:
- *"Alkyl"* einen gesättigten Kohlenwasserstoffrest, der verzweigt oder unverzweigt sein kann; bevorzugt ein C₁-C₇-Alkyl, besonders bevorzugt ein C₁-C₄-Alkyl, also ein Alkyl ausgewählt aus der Gruppe bestehend aus Methyl, Ethyl, n-Propyl, iso-Propyl, n-Butyl, iso-Butyl, und tert-Butyl; Methyl, Ethyl und tert-Butyl sind besonders bevorzugt, und ganz besonders bevorzugt ist Methyl;
- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- "*ein", "eine", "einer"* als Artikel vor einer chemischen Verbindungsklasse, z.B. vor dem Wort "Tris-[(methacryloyloxy)-alkyl]-isocyanursäure", dass eine oder mehrere unter diese chemische Verbindungsklasse fallende Verbindungen, z.B. verschiedene Tris-[(methacryloyloxy)-alkyl]-isocyanursäuren, gemeint sein können. In einer bevorzugten Ausführungsform ist mit diesem Artikel nur eine einzelne Verbindung gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus";*
- "*etwa"* oder *"circa"* oder "*ca.* " vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert);
- *"Epoxy(meth)acrylat"* ein Epoxidharz, das Acrylat- oder Methacrylatgruppen aufweist und im wesentlichen Epoxygruppen-frei ist;
- *"Härterkomponente"* eine Zusammensetzung, die einen Initiator für die Polymerisation einer radikalisch härtbaren Verbindung enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Hydroxyalkyl"* ein Alkyl, das mindestens eine Hydroxylgruppe als Substituenten trägt;
- *"Inhibitor"* einen Stoff, der eine unerwünschte radikalische Polymerisation während der Synthese oder der Lagerung eines Harzes oder einer Harz-haltigen Zusammensetzung unterdrückt (dieser Stoff wird in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (dieser Stoff wird in Fachkreisen auch als *"Inhibitor"* bezeichnet; die jeweilige Bedeutung des Begriffes erschließt sich aus dem Kontext);
- *"Initiator"* einen Stoff, der (üblicherweise in Kombination mit einem Beschleuniger) reaktionsinitiierende Radikale bildet;
- *"kalthärtend',* dass eine Reaktivharz-Zusammensetzung oder ein Reaktivharz-System bei Raumtemperatur vollständig aushärten kann;
- "*Mehrkomponenten-System"* bzw. "*Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Reaktivharzes erst nach dem Mischen aller Komponenten erfolgt;
- "*(Meth)acryl...*/*...(meth)acryl...*", dass sowohl die "Methacryl.../...methacryl..."- als auch die "Acryl.../...acryl..."-Verbindungen gemeint sein sollen; bevorzugt sind in der vorliegenden Erfindung "Methacryl.../...methacryl..." -Verbindungen gemeint;
- *"mindestens ein", "mindestens eine", "mindestens einer"* zahlenmäßig *"ein oder mehrere".* In einer bevorzugten Ausführungsform ist mit diesem Begriff zahlenmäßig "*ein", "eine", "einer"* gemeint;
- *"-propylen-"* eine Gruppe, die sowohl die 1,2-propylen- als auch die 1,3-propylen-Gruppe bedeuten kann, wobei die 1,2-propylen-Gruppe bevorzugt ist;
- "*Reaktivharz"* oder "*Basisharz"* mindestens eine üblicherweise feste oder hochviskose radikalisch härtbare Verbindung, welche durch Polymerisation härtet;
- "*Reaktivharzkomponente"* eine flüssige oder viskose Mischung aus Reaktivharz, einem oder mehreren Reaktivverdünner(n), einem oder mehreren Inhibitor(en), gegebenenfalls einem oder mehreren Beschleuniger(n), Füllstoffen, insbesondere anorganischen Füllstoffen, und optional weiteren Bestandteilen, z.B. (meist organischen) Additiven; typischerweise ist die Reaktivharzkomponente eine der beiden Komponenten eines Zweikomponenten-Reaktivharz-Systems zur chemischen Befestigung;
- "*Reaktivharz-Zusammensetzung"* mindestens eine radikalisch härtbare Verbindung als Reaktivharz, optional einem oder mehreren Reaktivverdünner(n), optional einem oder mehreren Inhibitor(en), optional einem oder mehreren Beschleuniger(n), optional Füllstoffen und optional weiteren Bestandteilen, z.B. (meist organischen) Additiven;
- *"Reaktivverdünner"* flüssige oder niedrigviskose Monomere und Reaktivharze, welche andere Reaktivharze verdünnen und dadurch die zu deren Applikation notwendige Viskosität verleihen, zur Reaktion mit dem Reaktivharz befähigte funktionelle Gruppen enthalten und bei der Polymerisation (Härtung) zum überwiegenden Teil Bestandteil der gehärteten Masse (z.B. des Mörtels) werden; Reaktivverdünner werden auch copolymerisierbares Monomer genannt;
- "*Zweikomponenten-System"* bzw. "*Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Reaktivharzes erst nach dem Mischen der beiden Komponenten erfolgt.

Alle in diesem Text genannten Normen (z.B. DIN-Normen) wurden in der zum Anmeldetag dieser Anmeldung aktuellen Ausgabe verwendet.

### Reaktivharz-Zusammensetzungen

Reaktivharz-Zusammensetzungen umfassen ein Reaktivharz, welches, wie oben definiert, mindestens eine üblicherweise feste oder hochviskose radikalisch härtbare Verbindung umfasst, welche durch Polymerisation härtet. Bei der mindestens einen radikalisch härtbaren Verbindung handelt es sich erfindungsgemäß um Tris-[(methacryloyloxy)-alkyl]-isocyanursäuren.

Das Reaktivharz kann folgendermaßen zusammengesetzt sein:
a) Mischung aus verschiedenen Tris-[(methacryloyloxy)-alkyl]-isocyanursäuren;
b) eine einzige Tris-[(methacryloyloxy)-alkyl]-isocyanursäure;
c) Mischung aus verschiedenen Tris-[(methacryloyloxy)-alkyl]-isocyanursäuren mit weiteren radikalisch härtbaren Verbindungen; oder
d) Mischung aus einer einzigen Tris-[(methacryloyloxy)-alkyl]-isocyanursäure mit weiteren radikalisch härtbaren Verbindungen.

Ein erster Gegenstand der Erfindung ist die Verwendung von mindestens einer Tris-[(methacryloyloxy)-alkyl]-isocyanursäure als radikalisch härtbare Verbindung in einer Reaktivharz-Zusammensetzung für die chemische Befestigung von Verankerungsmitteln in Bohrlöchern oder zum baulichen Kleben.

Bevorzugt handelt es sich bei Tris-[(methacryloyloxy)-alkyl]-isocyanursäuren um Verbindungen, bei denen die drei Alkylgruppen jeweils unabhängig voneinander ein gesättigter verzweigter oder unverzweigter Kohlenwasserstoffrest sind. Stärker bevorzugt sind die drei Alkylgruppen jeweils unabhängig voneinander ein C₁-C₇-Alkylrest, besonders bevorzugt ein C₁-C₄-Alkylrest, also ein Alkylrest ausgewählt aus der Gruppe bestehend aus Methyl, Ethyl, n-Propyl, iso-Propyl, n-Butyl, iso-Butyl, und tert-Butyl.

Als radikalisch härtbare Verbindungen können gemäß Punkt a) verschiedene Tris-[(methacryloyloxy)-alkyl]-isocyanursäuren als Mischung eingesetzt werden, die aus der Gruppe der oben beschriebenen Tris-[(methacryloyloxy)-alkyl]-isocyanursäuren ausgewählt sind.

Besonders bevorzugt wird gemäß Punkt b) eine einzige Tris-[(methacryloyloxy)-alkyl]-isocyanursäure als radikalisch härtbare Verbindung verwendet, die aus der Gruppe der oben beschriebenen Tris-[(methacryloyloxy)-alkyl]-isocyanursäuren ausgewählt ist. Insbesondere bevorzugt ist die Verwendung von Tris-[2-(methacryloyloxy)-ethyl]-isocyanursäure als radikalisch härtbare Verbindung in einer Reaktivharz-Zusammensetzung für die chemische Befestigung von Verankerungsmitteln in Bohrlöchern oder zum baulichen Kleben.

Eine Ausführungsform der Erfindung betrifft gemäß Punkt c) die Verwendung von mindestens einer Tris-[(methacryloyloxy)-alkyl]-isocyanursäure als radikalisch härtbare Verbindung in einer Reaktivharz-Zusammensetzung, wobei die Reaktivharz-Zusammensetzung mindestens eine weitere radikalisch härtbare Verbindung umfasst.

In dieser Ausführungsform beträgt der prozentuale Anteil (in Gew.-% bezogen auf die Summe aller radikalisch härtbaren Verbindungen) der mindestens einen Tris-[(methacryloyloxy)-alkyl]-isocyanursäure vorteilhafterweise mehr als etwa 20 Gew.-% und weniger als 100 Gew.-%, bevorzugt mehr als etwa 40 Gew.-% und weniger als 100 Gew.-%, und besonders bevorzugt mehr als etwa 60 Gew.-% und weniger als 100 Gew.-%. Mit dem Begriff "Summe aller radikalisch härtbaren Verbindungen" sind entweder eine Mischung verschiedener Tris-[(methacryloyloxy)-alkyl]-isocyanursäuren zusammen mit mindestens einer weiteren radikalisch härtbaren Verbindung gemeint oder eine einzige Tris-[(methacryloyloxy)-alkyl]-isocyanursäure zusammen mit mindestens einer weiteren radikalisch härtbaren Verbindung.

In einer besonders bevorzugten Ausgestaltung dieser Ausführungsform wird gemäß Punkt d) eine einzige Tris-[(methacryloyloxy)-alkyl]-isocyanursäure als radikalisch härtbare Verbindung, die aus der Gruppe der oben beschriebenen Tris-[(methacryloyloxy)-alkyl]-isocyanursäuren ausgewählt ist, und ganz besonders bevorzugt Tris-[2-(methacryloyloxy)-ethyl]-isocyanursäure, in einer Reaktivharz-Zusammensetzung verwendet, wobei die Reaktivharz-Zusammensetzung mindestens eine weitere radikalisch härtbare Verbindung umfasst.

In dieser Ausgestaltung beträgt der prozentuale Anteil (in Gew.-% bezogen auf die Summe aller radikalisch härtbaren Verbindungen) der einzigen Tris-[(methacryloyloxy)-alkyl]-isocyanursäure, und ganz besonders bevorzugt von Tris-[2-(methacryloyloxy)-ethyl]-isocyanursäure, vorteilhafterweise mehr als etwa 20 Gew.-% und weniger als 100 Gew.-%, bevorzugt mehr als etwa 40 Gew.-% und weniger als 100 Gew.-%, und besonders bevorzugt mehr als etwa 60 Gew.-% und weniger als 100 Gew.-%.

Als weitere radikalisch härtbare Verbindung neben der mindestens einen Tris-[(methacryloyloxy)-alkyl]-isocyanursäure in der Reaktivharz-Zusammensetzung sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt. Besonders bevorzugte Vinylesterharze sind Epoxy(meth)acrylate, die Dimethacrylate ethoxylierter Bisphenole, und Urethan(meth)acrylate. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze. Diesbezüglich wird die DE 10 2011 017 626 B4, und vor allem ihre Beschreibung der Zusammensetzung dieser Harze, insbesondere in den Beispielen der DE 10 2011 017 626 B4, hier durch Bezugnahme aufgenommen.

Beispiele geeigneter ungesättigter Polyester, die in der erfindungsgemäßen Reaktivharz-Zusammensetzung verwendet werden können, werden in folgende Kategorien eingeteilt, wie sie durch M. Malik et al. in J. M. S. - Rev. Macromol. Chem. Phys., C40(2 und 3), S.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): diese sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Disäure, z.B. Maleinsäure, mit Dicyclopentadien, und anschließend durch eine zweite Reaktion, der gewöhnlichen Herstellung eines ungesättigten Polyesterharzes, erhalten, wobei man bei letzterem von einem DCPD-Maleatharz spricht.

Das ungesättigte Polyesterharz hat bevorzugt ein Molekulargewicht Mₙ im Bereich von 500 bis 10.000 Dalton, stärker bevorzugt im Bereich von 500 bis 5.000 Dalton und noch stärker bevorzugt im Bereich von 750 bis 4.000 Dalton (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet, beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus US 3297745 A, US 3772404 A, US 4618658 A, GB 2217722 A1, DE 3744390 A1 und DE 4131457 A1 bekannt. In diesem Zusammenhang wird auf die Anmeldung US 2011/0071234 A1 verwiesen.

Das Vinylester-Harz hat bevorzugt ein Molekulargewicht Mₙ im Bereich von 500 bis 3.000 Dalton, stärker bevorzugt 500 bis 1.500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Beispiele für derartige Epoxy(meth)acrylate sind solche der Formel (I) 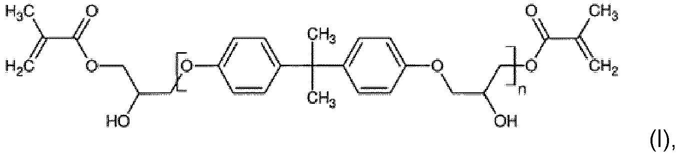 worin n für eine Zahl grösser oder gleich 1 steht (wenn Gemische verschiedener Moleküle mit unterschiedlichen n-Werten vorliegen und durch die Formel (I) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (II) 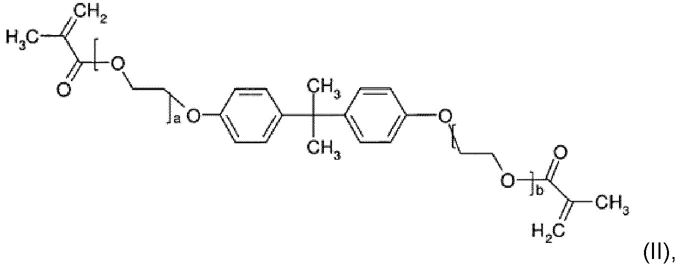 worin a und b jeweils unabhängig voneinander für eine Zahl grösser oder gleich 0 stehen, mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (II) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propan-bis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 0 044 352 A1 beschrieben sind. In diesem Zusammenhang wird auf die DE 2312559 A1, DE 19902685A1, EP 0 684 906 A1, DE 4111828 A1 und DE 19961342A1 verwiesen. Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Der prozentuale Anteil (in Gew.-% bezogen auf die Summe aller radikalisch härtbaren Verbindungen) der mindestens einen weiteren radikalisch härtbaren Verbindung beträgt vorteilhafterweise weniger als etwa 80 Gew.-%, bevorzugt weniger als etwa 60 Gew.-%, und besonders bevorzugt weniger als etwa 40 Gew.-%.

In einer besonders bevorzugten Ausführungsform ist die mindestens eine weitere radikalisch härtbare Verbindung eine Methacrylat-funktionalisierte Verbindung. Grund dafür ist die höhere Alkalistabilität von Methacrylat-funktionalisierten Verbindungen im Vergleich zu Acrylatfunktionalisierten Verbindungen.

Bevorzugte weitere radikalisch härtbare Verbindungen sind die in den Beispielen verwendeten weiteren radikalisch härtbaren Verbindungen, bevorzugt etwa in den in den Beispielen angegebenen Mengen.

In einer alternativen Ausführungsform enthält die Reaktivharz-Zusammensetzung keine weitere radikalisch härtbare Verbindung, d.h. es wird ausschließlich die mindestens eine Tris-[(methacryloyloxy)-alkyl]-isocyanursäure als radikalisch härtbare Verbindung in der Reaktivharz-Zusammensetzung verwendet. In einer bevorzugten alternativen Ausführungsform wird ausschließlich eine einzige Tris-[(methacryloyloxy)-alkyl]-isocyanursäure, insbesondere Tris-[2-(methacryloyloxy)-ethyl]-isocyanursäure, als radikalisch härtbare Verbindung in der Reaktivharz-Zusammensetzung verwendet.

Eine weitere bevorzugte Ausführungsform der Erfindung betrifft die Verwendung von mindestens einer Tris-[(methacryloyloxy)-alkyl]-isocyanursäure als radikalisch härtbare Verbindung in einer Reaktivharz-Zusammensetzung, wobei die Reaktivharz-Zusammensetzung zusätzlich mindestens einen Reaktivverdünner und/oder zusätzlich mindestens einen Inhibitor und/oder zusätzlich mindestens einen Beschleuniger umfasst.

Besonders bevorzugt ist die Verwendung von einer einzigen Tris-[(methacryloyloxy)-alkyl]-isocyanursäure, insbesondere von Tris-[2-(methacryloyloxy)-ethyl]-isocyanursäure, als radikalisch härtbare Verbindung in einer Reaktivharz-Zusammensetzung, wobei die Reaktivharz-Zusammensetzung zusätzlich mindestens einen Reaktivverdünner und/oder zusätzlich mindestens einen Inhibitor und/oder zusätzlich mindestens einen Beschleuniger umfasst.

Der prozentuale Anteil (in Gew.-% der Reaktivharz-Zusammensetzung, die neben den radikalisch härtbaren Verbindungen zusätzlich mindestens einen Reaktivverdünner und/oder einen Inhibitor und/oder einen Beschleuniger umfasst) der mindestens einen Tris-[(methacryloyloxy)-alkyl]-isocyanursäure beträgt vorteilhafterweise mehr als etwa 10 Gew.-% und weniger als 100 Gew.-%, bevorzugt von etwa 20 Gew.-% bis etwa 50 Gew.-%, und besonders bevorzugt von etwa 30 Gew.-% bis etwa 45 Gew.-%.

In einer bevorzugten Ausführungsform umfasst die Reaktivharz-Zusammensetzung neben den radikalisch härtbaren Verbindungen ferner mindestens einen Reaktivverdünner, mindestens einen Inhibitor, gegebenenfalls einen oder mehrere Beschleuniger und (meist organische) Additive wie z.B. Haftvermittler. Geeignete Beschleuniger sind weiter unten im Zusammenhang mit dem Härtersystem beschrieben.

### Reaktivverdünner

In einer bevorzugten Ausführungsform der Erfindung enthält die Reaktivharz-Zusammensetzung neben den radikalisch härtbaren Verbindungen einen oder mehrere Reaktivverdünner, um die Viskosität der radikalisch härtbaren Verbindungen anzupassen, falls dies erforderlich sein sollte.

Geeignete Reaktivverdünner sind in den Anmeldungen EP 1 935 860 A1 und DE 195 31 649 A1 beschrieben. Vorzugsweise enthält die Reaktivharz-Zusammensetzung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2- und 3-Hydroxypropyl(meth)acrylat (HP(M)A), 1,2-Ethandioldi(meth)acrylat, 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, *N*,*N*-Dimethylaminoethyl(meth)acrylat, *N*,*N*-Dimethylaminomethyl(meth)acrylat, Acetoacetoxyethyl(meth)acrylat, Isobornyl(meth)acrylat, 2-Ethylhexyl(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Tricyclo[5.2.1.0]decandimethanoldi(meth)acrylat Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, und Decalyl-2-(meth)acrylat; Solketal(meth)acrylat, Cyclohexyl(meth)acrylat, Phenoxyethyldi(meth)acrylat, Methoxyethyl(meth)acrylat, tert-Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat (EGDMA), 1,4-Butandioldimethacrylat (BDDMA), 1,3-Butandioldimethacrylat, Trimethylolpropantrimethacrylat (TMPTMA), Acetoacetoxyethylmethacrylat, Isobornylmethacrylat (IBoMA), Tricyclo[5.2.1.0]decandimethanoldimethacrylat (TCDDMA), Bisphenol-A-methacrylat, Trimethylcyclohexylmethacrylat, 2-Hydroxyethylmethacrylat, PEG200-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie *tert-*Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

In der Reaktivharz-Zusammensetzung, die neben den radikalisch härtbaren Verbindungen zusätzlich mindestens einen Reaktivverdünner umfasst und ggf. einen Inhibitor und/oder einen Beschleuniger, ist der mindestens eine Reaktivverdünner bevorzugt in einer Menge bis etwa 60 Gew.-%, besonders bevorzugt von etwa 10 Gew.-% bis etwa 55 Gew.-%, noch bevorzugter von etwa 20 Gew.-% bis etwa 50 Gew.-%, noch bevorzugter von etwa 30 Gew.-% bis etwa 45 Gew.-%, bezogen auf die Reaktivharz-Zusammensetzung, die neben den radikalisch härtbaren Verbindungen zusätzlich mindestens einen Reaktivverdünner umfasst und ggf. einen Inhibitor und/oder einen Beschleuniger, vorhanden.

Bevorzugte Reaktivverdünner sind die in den Beispielen verwendeten Reaktivverdünner, bevorzugt etwa in den in den Beispielen angegebenen Mengen.

### Inhibitoren

Sowohl zur Stabilisierung der radikalisch härtbaren Verbindungen oder der die radikalisch härtbaren Verbindungen enthaltenden Zusammensetzungen, als auch zur Einstellung der Harzreaktivität können in der Reaktivharz-Zusammensetzung ein oder mehrere Inhibitor(en) vorhanden sein.

Hierfür sind die für radikalisch polymerisierbare Verbindungen üblicherweise verwendeten Inhibitoren geeignet, wie sie dem Fachmann bekannt sind. Bevorzugt sind diese Inhibitoren unter phenolischen Inhibitoren und nicht-phenolischen Inhibitoren, insbesondere Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Catechole, wie Brenzkatechin, und Catecholderivate, wie Butylbrenzkatechine, wie 4-tert-Butylbrenzkatechin und 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet. Diese Inhibitoren sind oft Bestandteil von kommerziell erhältlichen radikalisch härtenden Reaktivharzkomponenten.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-Oxyl-Radikale, insbesondere vom Piperidinyl-*N*-oxyl- oder Tetrahydropyrrol-*N*-oxyl-Typ, in Betracht, wie Aluminium-*N*-nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, TEMPOL, TEMPO und dergleichen.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Als stabile *N*-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-*N*-oxyl oder Tetrahydropyrrol-*N*-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist.

Bevorzugt sind der oder die Inhibitor(en) ausgewählt aus der Gruppe bestehend aus *N*-Oxyl-Radikalen, Catecholen, Catecholderivaten, Phenothiazinen und einem Gemisch von zwei oder mehreren davon. Besonders bevorzugt sind der oder die Inhibitor(en) ausgewählt aus der Gruppe bestehend aus TEMPOL, Catecholen und Phenothiazinen. Ganz besonders bevorzugt sind die in den Beispielen verwendeten Inhibitoren, bevorzugt etwa in den in den Beispielen angegebenen Mengen.

Die Inhibitoren können, abhängig von den gewünschten Eigenschaften des Reaktivharzes, entweder allein oder als Kombination von zweien oder mehreren davon verwendet werden. Die Kombination von phenolischen und nicht-phenolischen Inhibitoren ist bevorzugt.

Der Inhibitor oder die Inhibitormischung wird in der Fachwelt bekannten üblichen Mengen zugesetzt, bevorzugt in einer Menge von etwa 0,0005 Gew.-% bis etwa 2 Gew.-% (bezogen auf die Summe aller radikalisch härtbaren Verbindungen), stärker bevorzugt von etwa 0,01 Gew.-% bis etwa 1 Gew.-% (bezogen auf die Summe aller radikalisch härtbaren Verbindungen), noch stärker bevorzugt von etwa 0,05 Gew.-% bis etwa 1 Gew.-% (bezogen auf die Summe aller radikalisch härtbaren Verbindungen).

### Zusätzliche Additive

In einer Ausführungsform kann die Reaktivharz-Zusammensetzung zusätzlich Additive enthalten.

In einer bevorzugten Ausführungsform enthält die Reaktivharz-Zusammensetzung zusätzlich einen Haftvermittler. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung einer Zweikomponenten-Dübelmasse z.B. in mit einem Diamantbohrer gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst z.B. 3-(Meth)acryloxypropyltrimethoxysilan, 3-(Meth)acryloxypropyltriethoxysilan, 3-(Meth)acryloxymethyltrimethoxysilan, 3-(Meth)acryloxymethyltriethoxysilan, Vinyltrimethoxysilan, Vinyltriethoxysilan, funktionalisiertes Tetraethoxysilan, funktionalisiertes Tetramethoxysilan, funktionalisiertes Tetrapropoxysilan, funktionalisiertes Ethyl- oder Propylpolysilikat, und Gemische von zwei oder mehr davon. In dieser Hinsicht wird Bezug genommen auf die Anmeldung DE 10 2009 059210 A1, deren diesbezüglicher Inhalt hiermit in diese Anmeldung aufgenommen wird.

Der Haftvermittler ist zweckmäßig in Mengen von etwa 0,5 Gew.-% bis etwa 10 Gew.-% bezogen auf das Gesamtgewicht der Reaktivharz-Zusammensetzung, die neben den radikalisch härtbaren Verbindungen zusätzlich einen Haftvermittler umfasst und mindestens einen Reaktivverdünner und/oder einen Inhibitor und/oder einen Beschleuniger, enthalten.

Eine weitere bevorzugte Ausführungsform der vorliegenden Erfindung ist die Verwendung von mindestens einer Tris-[(methacryloyloxy)-alkyl]-isocyanursäure als radikalisch härtbare Verbindung in einer Reaktivharz-Zusammensetzung, wobei die Reaktivharz-Zusammensetzung zusätzlich Füllstoffe und/oder Additive umfasst.

Besonders bevorzugt ist die Verwendung von einer einzigen Tris-[(methacryloyloxy)-alkyl]-isocyanursäure, insbesondere von Tris-[2-(methacryloyloxy)-ethyl]-isocyanursäure, als radikalisch härtbare Verbindung in einer Reaktivharz-Zusammensetzung, wobei die Reaktivharz-Zusammensetzung zusätzlich Füllstoffe und/oder Additive umfasst.

Bei der Reaktivharz-Zusammensetzung kann es sich somit um eine Reaktivharzkomponente wie oben definiert handeln.

Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe vorteilhafterweise nicht überschreiten.

Zur Herstellung einer Reaktivharzkomponente für bauliche Anwendungen, inbesondere für die chemische Befestigung, können den bereits beschriebenen Reaktivharz-Zusammensetzungen übliche Füllstoffe zugegeben werden. Diese Füllstoffe sind typischerweise anorganische Füllstoffe, wie beispielsweise weiter unten beschrieben.

Der Anteil aller radikalisch härtbaren Verbindungen in der Reaktivharzkomponente beträgt bevorzugt von etwa 10 Gew.-% bis etwa 70 Gew.-%, stärker bevorzugt von etwa 20 Gew.-% bis etwa 60 Gew.-%, noch stärker bevorzugt von etwa 25 Gew.-% bis etwa 50 Gew.-%, bezogen auf die Reaktivharzkomponente.

Dementsprechend beträgt der Anteil der gesamten Füllstoffe und anorganischen Additive bevorzugt von etwa 30 Gew.-% bis etwa 90 Gew.-%, stärker bevorzugt von etwa 40 Gew.-% bis etwa 80 Gew.-%, noch stärker bevorzugt von etwa 50 Gew.-% bis etwa 75 Gew.-%, bezogen auf die Reaktivharzkomponente.

### Füllstoffe

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl und Mischungen aus zwei oder mehreren davon. Für die Reaktivharzkomponente besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl und Mischungen aus zwei oder mehreren davon. Ganz besonders bevorzugt ist für die Reaktivharzkomponente eine Mischung aus Zement (insbesondere Aluminatzement (oft auch als Tonerdezement bezeichnet) oder Portlandzement), pyrogener Kieselsäure und Quarzsand. Für die Härterkomponente ist pyrogene Kieselsäure als alleiniger Füllstoff oder als einer von mehreren Füllstoffen bevorzugt; besonders bevorzugt sind neben der pyrogenen Kieselsäure noch einer oder mehrere weitere Füllstoffe vorhanden.

### Weitere Additive

Weitere denkbare Zusätze sind ferner Rheologieadditive, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Ferner können Mittel zur Regulierung des pH-Wertes, wie anorganische und/oder organische Säuren gemäß DE 10 2010 008971 A1, insbesondere Copolymere mit sauren Gruppen, z.B. Estern der Phosphorsäure, eingesetzt werden. Auch nicht reaktive Verdünnungsmittel (Lösungsmittel) können, vorzugsweise in einer Menge bis zu 30 Gew.-%, bezogen auf die jeweilige Komponente (Reaktivharzmörtel, Härter), beispielsweise von 1 Gew.-% bis 20 Gew.-%, vorliegen, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, oder Wasser, oder Glykole. Darüber hinaus können auch Mittel zur Verbesserung der Verträglichkeit zwischen Harz- und Härterkomponente, wie ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen, verwendet werden.

Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure, z.B. mit Polydimethylsiloxan (PDMS) nachbehandelte pyrogene Kieselsäure, insbesondere bevorzugt die in den Beispielen verwendete apolar nachbehandelte pyrogene Kieselsäure.

In dieser Hinsicht wird Bezug genommen auf die Anmeldungen WO 02/079341 A1 und WO 02/079293 A1 sowie WO 2011/128061 A1.

In einer Ausführungsform kann ein Haftvermittler auch erst zu der Reaktivharzkomponente zugegeben werden. Geeignete Haftvermittler wurden bereits weiter oben beschrieben.

Der Haftvermittler ist zweckmäßig in Mengen von etwa 1 Gew.-% bis etwa 10 Gew.-% bezogen auf das Gesamtgewicht der Reaktivharzkomponente enthalten.

### Härtersystem

Für die Härtung der radikalisch härtbaren Verbindung(en) wird ein Härtungsmittel verwendet.

Bevorzugt wird ein Härtersystem verwendet, welches das Härtungsmittel und einen Beschleuniger umfasst.

Dabei kann der Beschleuniger auch der Reaktivharz-Zusammensetzung zugegeben werden.

Die Härtung der radikalisch härtbaren Verbindung(en) kann mit einem Peroxid als Initiator initiiert werden. Dementsprechend beinhaltet in einer Ausführungsform das Härtersystem
- als Initiator ein Peroxid und
- mindestens einen für die Härtung mit Peroxiden üblicherweise verwendeten Beschleuniger.

Alle dem Fachmann bekannten Peroxide, die zum Härten von Epoxid(meth)acrylatharzen verwendet werden, können eingesetzt werden. Derartige Peroxide umfassen organische und anorganische Peroxide, entweder flüssig oder fest, wobei auch Wasserstoffperoxid verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-), Hydroperoxide (der Formel -OOH) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-Acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. In einer bevorzugten Ausführungsform wird zum Härten Benzoylperoxid (BPO) oder tert-Butylperoxybenzoat verwendet.

Das Peroxid kann in seiner Reinform oder als Bestandteil einer Mischung verwendet werden. Typischerweise wird es als Bestandteil einer Mischung verwendet, insbesondere als Bestandteil einer Härterkomponente (B) eines Reaktivharz-Systems, wie es weiter unten genauer beschrieben wird. Die in den Beispielen verwendete Härterkomponente bzw. eine Härterkomponente mit denselben Bestandteilen ist besonders bevorzugt.

Auch die Verwendung von organisch substituierten Ammoniumpersulfaten (beispielsweise N'N'N'N'-Tetrabutylammonium- oder N'N'N'-Tricapryl-N'-methylammoniumpersulfat ist möglich.

Neben dem Peroxid kann das Härtersystem noch ein Phlegmatisierungsmittel enthalten, um das Peroxid zu stabilisieren. Entsprechende Phlegmatisierungsmittel sind aus der DE 32 26 602 A1, EP 0 432 087 A1 und EP 1 371 671 A1 bekannt.

Ein solches Härtersystem enthält bevorzugt Wasser als Phlegmatisierungsmittel. Neben dem Wasser kann das Härtersystem noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Bevorzugt liegt das Peroxid zusammen mit dem Wasser als Suspension vor. Entsprechende Suspensionen sind in unterschiedlichen Konzentrationen kommerziell erhältlich, wie beispielsweise die wässrigen Dibenzoylperoxid-Suspensionen BP-40-SAQ (United Initiators), Perkadox^{®} 40L-W (Fa. Nouryon), Luperox^{®} EZ-FLO (Fa. Arkema) oder Peroxan BP-40 W (Fa. Pergan).

In alternativen Ausführungsformen liegt das Peroxid mit einem Phlegmatisierungsmittel als Pulver oder Paste vor. Entsprechende Zusammensetzungen sind in unterschiedlichen Konzentrationen kommerziell erhältlich, wie beispielsweise Perkadox^{®} 20S (Fa. Akzo Nobel) oder Benox B-50 (Fa. United Initiators).

Das Peroxid kann in einer Menge von 0,1 Gew.-% bis 35 Gew.-%, bevorzugt von 0,25 Gew.-% bis 35 Gew.-%, stärker bevorzugt von 1 Gew.-% bis 30 Gew.-%, besonders bevorzugt von 5 Gew.-% bis 28 Gew.-%, bezogen auf die Härterzusammensetzung, im Härtersystem enthalten sein.

In dem beschriebenen Härtersystem wird zusätzlich zu dem Peroxid ein Beschleuniger verwendet. Hierdurch wird die Härtungsreaktion beschleunigt. Dieser Beschleuniger muss räumlich getrennt vom Peroxid gelagert werden, um so dessen vorzeitigen Zerfall zu verhindern. Bevorzugt wird der Beschleuniger der Reaktivharz-Zusammensetzung zugegeben.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011/0071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl(2-chloroethyl)amin, 2-Ethylhexylamin, Bis(2-chloroethyl)amin, 2-Ethylhexylamin, Bis(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis(2-hydroxyethyl)oleylamin, Tris-[2-(2-hydroxy-ethoxy)-ethyl]amin, 3-Amino-1-propanol, Methyl(3-aminopropyl)ether, Ethyl-(3-aminopropyl)ether, 1,4-Butandiol-bis(3-aminopropyl)ether, 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methylpropandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diamino-dimethyldicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierte Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)-p-toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine wie solche, die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidin, N,N-Bis(2-hydroxyethyl)toluidin und para-Toluidin Ethoxylat (Bisomer^{®} PTE).

In dieser bevorzugten Ausführungsform kann der Beschleuniger in einer Menge von 0,01 Gew.-% bis 10 Gew.-%, bevorzugt von 0,1 Gew.-% bis 5 Gew.-%, besonders bevorzugt von 0,1 Gew.-% bis 3 Gew.-%, bezogen auf die Reaktivharzkomponente, in dem Reaktivharz-System enthalten sein.

Alternativ kann für die Härtung ein Härtersystem verwendet werden, welches peroxidfrei ist und die folgenden Bestandteile beinhaltet:
- mindestens eine Manganverbindung als Beschleuniger und
- eine 1,3-Dioxoverbindung als Initiator.

Hierzu wird auf die DE 10 2011 078 785 A1 verwiesen.

Geeignete 1,3-Dioxoverbindungen sind Verbindungen der allgemeinen Formel (III) 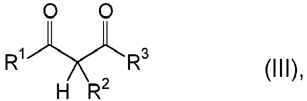 in der
R¹ und R³ jeweils unabhängig voneinander eine unverzweigte oder verzweigte, gegebenenfalls substituierte C₁-C₄-Alkylgruppe oder eine C₁-C₄-Alkoxygruppe sind,
R² eine unverzweigte oder verzweigte, gegebenenfalls substituierte C₁-C₄-Alkylgruppe oder eine C₁-C₄-Alkoxygruppe ist, oder zusammen mit R¹ oder R³ einen gegebenenfalls substituierten fünf- oder sechsgliedrigen aliphatischen Ring bildet, welcher gegebenenfalls Heteroatome im oder am Ring umfasst.

In diesem Härtersystem ist es wesentlich, dass in der Verbindung der Formel (III) das Kohlenstoffatom, welches die zwei Carbonylgruppen miteinander verbindet, genau ein an dieses Kohlenstoffatom gebundenes Wasserstoffatom aufweist.

Bevorzugt ist aus der Gruppe der Verbindungen der allgemeinen Formel (III) eine Verbindung der Formel (IV) 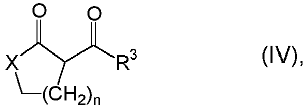 in der unabhängig X = CH₂, O, n = 1, 2 und R³ eine unverzweigte oder verzweigte, gegebenenfalls substituierte C₁-C₄-Alkylgruppe oder eine C₁-C₄-Alkoxygruppe ist. X ist stärker bevorzugt O. n ist stärker bevorzugt 1. R³ ist stärker bevorzugt eine C₁-C₄-Alkylgruppe.

Besonders bevorzugt ist aus der Gruppe der Verbindungen der Formel (III) 2-Methyl-2,4-pentandion, α-Acetylbutyrolacton, Cyclopentanon-2-carbonsäureethylester oder Cyclopentanon-2-carbonsäuremethylester, wobei α-Acetylbutyrolacton am stärksten bevorzugt ist.

Als Beschleuniger wird eine Manganverbindung, insbesondere ein Mangansalz oder ein Mangankomplex verwendet. Es können auch Gemische von Mangansalzen und/oder Mangankomplexen verwendet werden.

Als besonders geeignet haben sich Mangansalze oder Mangankomplexe, insbesondere basierend auf 1,3-Dioxoverbindungen, wie Acetylacetonat (Pentan-2,4-dion), und Carbonsäuren, wie Naphthenate, Octoate, Ethylhexanoate oder gesättigte Fettsäuren, erwiesen. Hinsichtlich der Manganverbindung bestehen keine Einschränkungen. Zweckmäßig ist die Manganverbindung in unpolaren Lösungsmitteln löslich. Ganz besonders geeignet ist Mn(II)-octoat.

Ebenfalls alternativ kann für die Härtung ein Härtersystem verwendet werden, welches die folgenden Bestandteile beinhaltet:
- mindestens ein Metallsalz als Beschleuniger und
- mindestens eine Thiol- und/oder Thiolester-Gruppen beinhaltende Verbindung als Initiator.

Durch die Kombination bzw. das Mischen der beiden Bestandteile können Radikale gebildet werden, welche anstelle von bisher üblichen Radikalbildnern eine Polymerisation von nichtaromatischen Doppelbindungen, z.B. olefinischen Doppelbindungen, beispielsweise Acrylaten oder Methacrylaten, auslösen können.

Beispiele für Thiole sind Thioglycerin, Methyl-, Ethylmercaptan und höhere Homologe z.B. Dodecylmercaptan; Dimercaptane, wie Dimercaptopropansulfonsäure, Dimercaptobernsteinsäure, Dithiothreitol; Poly(ethylenglykol)dithiole der allgemeinen Formel HS-[CH₂-CH₂-O]ₙ-CH₂-CH₂-SH, worin n für eine Zahl zwischen 0 bis 10 steht; flüssige Polysulfidpolymere mit Thiol-Endgruppen z.B. Thioplast G Typen der Firma Akzo Nobel; Polymercaptanhärter und -vernetzer z.B. SIQ-Amin 999 der Firma S.I.Q.-Kunstharze GmbH; ethoxylierte und/oder propoxylierte Alkohole aus Mono-, Di-, Tri-, Tetra-, Pentaolen und/oder anderen Polyolen mit Thiolendgruppen z.B. Capcure 3-800 der Firma Cognis, oder die nachfolgend als insbesondere geeigneten Thiole genannten Verbindungen. Als besonders geeigneter Thiolester sei hier der Octanthiolsäure-S-[3(triethoxysilyl)propyl]ester erwähnt. Beispiele für insbesondere geeignete Thiole sind Glykoldi(3-mercaptopropionat), Trimethylolpropantri(3-mercaptopropionat), Pentaerythritoltetra(3-mercaptopropionat), Dipentaerythritolhexa-3-mercaptopropionat, ethoxyliertes Trimethylolpropan-tris(3-mercaptopropionat) mit unterschiedlichen Ethoxylierungsgraden (z.B. ETTMP 700 und ETTMP 1300 der Firma Bruno Bock), Tris[2-(3-mercaptopropionyloxy)ethyl]isocyanurat, 3-Mercaptopropyltrimethoxysilan.

Als weitere Alternative kann für die Härtung ein Härtersystem verwendet werden, welches die folgenden Bestandteile beinhaltet:
- mindestens ein Metallsalz als Beschleuniger und
- mindestens eine CH-acide Verbindung der Formel (V) als Initiator 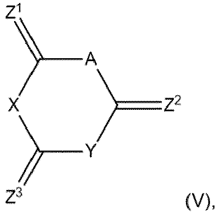 worin
   (i)
      -A- für -C(R¹)(R²)- steht,
      -X- für eine Bindung, -NR³-, -(CR⁴R⁵)ₚ- oder -O- steht,
      -Y- für -NR⁶-, -(CR⁷R⁸)_{q}- oder -O- steht,
      wobei, wenn X für O steht, auch Y für O steht;
      wobei vorzugsweise X für (CR⁴R⁵)ₚ steht und Y für CR⁷R⁸ steht,
      oder X für NR³ und Y für NR⁶ steht,
      Z¹ für O, S, S=O oder S(=O)₂ steht,
      Z² für O, S, S=O oder S(=O)₂ steht,
      Z³ für O, S, S=O oder S(=O)₂ oder für R⁹ und R¹⁰ steht,
      p für 1, 2 oder 3 steht, vorzugsweise für 1 oder 2,
      q für 1, 2 oder 3 steht, vorzugsweise für 1,
      und die Reste R¹, R², R³, R⁴, R⁵, R⁶, R⁷, R⁸, R⁹ und R¹⁰ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen; vorzugsweise ausgewählt aus O, N, wie NH oder N-Alkyl, und S) aufweisen, mit der Maßgabe, dass mindestens einer der Reste R¹ und R² Wasserstoff bedeutet,
      oder
   (ii) offenkettige Verbindungen,
      worin das die Brücke bildende Glied -C(=Z³)- fehlt,
      -A- für -C(R¹)(R²)- steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder vorzugsweise für eine jeweils unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkoxycarbonylmethylgruppe oder C₁-C₄-Alkylcarbonylmethylgruppe stehen,
      R¹ und R² beide Wasserstoff bedeuten und
      Z¹ und Z² die genannten Bedeutungen haben;
      oder X für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe steht,
      Y und Z² gemeinsam mit dem bindenden Kohlenstoffatom -CN bedeuten,
      Z¹ die oben genannten Bedeutungen hat, und
      R¹ und R² jeweils wie oben definiert sind mit der Maßgabe, dass mindestens einer der Reste Wasserstoff bedeutet;
      und/oder Salze davon.

Bevorzugte Beispiele für solche Verbindungen sind Barbitursäure (2,4,6-Pyrimidintrion), 2,4,6-Pyrimidintrionderivate wie 1-Benzyl-5-phenylbarbitursäure (1-(Phenylmethyl)-5-Phenyl-2,4,6-Pyrimidintrion), 5-Butylbarbitursäure (5-Butyl-2,4,6-Pyrimidintrion), 1-Cyclohexyl-5-ethylbarbitursäure (1-Cyclohexyl-5-Ethyl-2,4,6-Pyrimidintrion) oder 2-Thiobarbitursäure (4,6-Dihydroxy-2-Mercaptopyrimidin), 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3- dioxan-4,6-dion oder 2,2,5-Trimethyl-1,3-dioxan-4,6-dion, 3-Oxoglutarsäuredimethylester, und/oder Diethyl-1,3-acetondicarboxylat, Ethylcyanoacetat, Methylcyanoacetat oder 2-Ethylhexylcyanoacetat, oder in der DE 10 2011 078 785 A1 genannte 1,3-Dioxoverbindungen.

Bei den als Beschleuniger in Form eines Metallsalzes, was auch Metallkomplexe und Metalloxide einschließt, verwendeten Komponenten handelt es sich in beiden Fällen vorzugsweise um ein oder mehrere Metallsalze und insbesondere um Salze von organischen und/oder anorganischen Säuren mit Metallen, z.B. ausgewählt aus Kobalt, Zirkonium, Zink, Cer, Zinn, Wismut oder vorzugsweise Vanadium, Mangan, Kupfer oder Eisen, oder Gemischen von zwei oder mehr davon, wobei die organischen Säuren vorzugsweise gesättigt sind, wobei Vanadium und Eisen oder insbesondere Mangan und Kupfer, ggf. in Gegenwart eines oder zweier Co-Beschleuniger mit Metallanteil aus der Gruppe der oben genannten Metalle, bevorzugt ist, insbesondere in Form von Salzen oder Komplexen mit anorganischen Säuren und/oder Carboxylatresten, wie Carboxylaten mit CH₃, C₂-C₂₀-Alkyl, einem C₆-C₂₄-Arylrest oder C₇-C₃₀-Aralkylrest, beispielsweise Oktoat, z.B. 2-Ethylhexanoat (Isooctanoat), ferner Neodecanoat, oder Acetylacetonat. Besonders bevorzugt sind Mangancarbonat oder -carboxylate, wie Manganacetat oder Manganoctoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat und Kupferchlorid umfasst.

In einer weiteren Alternative kann für die Härtung ein Härtersystem verwendet werden, welches die folgenden Bestandteile beinhaltet:
- mindestens ein Metallsalz als Beschleuniger und
- als Initiator mindestens einen Aldehyd und/oder ein Keton und mindestens ein primäres Amin, und/oder
- mindestens ein Imin, welches ein oder mehrere Imin-Strukturinkremente der Formel (VI) beinhaltet: 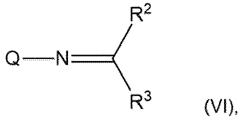 worin unabhängig voneinander
   Q den organischen Rest des (jeweils) verwendeten Amins darstellt, oder für Wasserstoff steht; und
   R² und R³ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet;
und/oder Salze davon.

Bevorzugt liegt das Molekulargewicht der Imin-Strukturinkremente der Formel (VI) beinhaltenden Imine bei 2000 Dalton (g/mol) oder niedriger, beispielsweise bei 1000 Dalton oder niedriger. Auch die Aldehyde und/oder Ketone haben jeweils vorzugsweise Molekulargewichte in diesen Bereichen.

Dieses Härtersystem kann als fertige Härterzusammensetzung (beispielsweise mit mikroverkapselten Bestandteilen) vorliegen oder vorzugsweise erst bei der Mischung mit weiteren Bestandteilen einer Kunstharzzusammensetzung (gewissermaßen als Zusammensetzung (Mischung)) ausgeformt werden, beispielsweise bei der Verwendung.

Die beinhalteten bzw. verwendeten Aldehyde, Ketone, Amine, Aldimine oder Ketimine sind bekannt oder nach an sich bekannten Verfahren herstellbar/erhältlich bzw. werden vorzugsweise danach erhalten. Die Imine können vor der Anwendung (z.B. zur Befestigung von Verankerungselementen) oder auch erst "in situ" synthetisiert bzw. erhalten werden. Mögliche erfindungsgemäße Verfahren sind also (t) die separate vorherige Herstellung und/oder (tt) die "in situ" Herstellung, bei der der Aldehyd/das Keton und das primäre Amin auf unterschiedliche Komponenten des Befestigungssystems aufgeteilt werden und beispielsweise am Ort der Anwendung vermischt werden und/oder (ttt) die "in situ" Herstellung in einer Komponente des Befestigungssystems, bei der der Aldehyd/das Keton und das primäre Amin bei der Zubereitung der jeweiligen Komponente gemeinsam vermischt werden. Insbesondere die Imine gemäß (t) werden durch Kondensation unter Abspaltung von Wasser aus einem oder mehreren Amin(en) mit einem oder mehreren Aldehyd(en) bzw. Keton(en) erhalten. Entsprechende Reaktionsbedingungen für die separate vorherige Umsetzung (t) sind dem Fachmann bekannt.

Beispiele für geeignete Amine und Aldehyde oder Ketone finden sich insbesondere in der DE 10 2004 035 542 A1, EP 1 329 469 A1, EP 1 975 190 A1 und der EP 2 017 260 A1.

Die als solche zugesetzten oder zur Synthese der Imine geeigneten primären Amine umfassen beispielsweise Mono-, Di- oder Polyamine, oder Mischungen von zwei oder mehr davon. Die einsetzbaren Mono-, Di- und/oder Polyamine können sowohl linear als auch verzweigt sein. Das Molekülgerüst der Mono- und/oder Di- und/oder Polyamine kann aliphatische, heteroaliphatische, alicyclische, heterocyclische, aromatische, aliphatischaromatische und Silan/Siloxan-Molekülstrukturen oder zwei oder mehr unabhängig ausgewählte davon enthalten. Im Molekül können primäre und/oder sekundäre und tertiäre Aminogruppen vorhanden sein, jedoch muss mindestens eine primäre Aminogruppe (-NH₂), zur Ausbildung des Aldimins bzw. Ketimins, enthalten sein.

Die Mono-, Di- oder Polyamine sind bevorzugt aus der Gruppe der Alkyl- oder Alkylen(mono oder di)amine (wie z.B. 2-Methylpentandiamin, oder 2,2,4- oder 2,4,4-Trimethylhexamethylendiamin), der Heteroalkyl- oder Heteroalkylen(mono oder di)amine (wie beispielsweise 1,13-Diamino-4,7,10-trioxatridecan, kommerziell erhältliche aminfunktionalisierte Polyoxyalkylene [Jeffamine] der Firma Huntsman Corp, oder z.B. Triethylentetramin und/oder höhere Homologe), der Cycloalkyl- oder Cycloalkylen(mono oder di)amine (wie z.B. Isophorondiamin, 1,3-Bisaminomethylcyclohexan, TCD-Diamin), der Heterocyloalkyl- oder Heterocycloalkylen(mono oder di)amine (wie z.B. Aminoethylpiperazin), der Aminole bzw. Aminoalkohole (wie z.B. 1,3-Diaminopropan-2-ol), und der aliphatischaromatischen (mono oder di)amine (wie 1,3- oder 1,4-Benzoldimethanamin), ausgewählt und/oder aus der Gruppe der aminosilanisierten Füllstoffe.

Weiterhin bevorzugt können die Mono-, Di- oder Polyamine aus der Gruppe der Aminoamide, Polyaminoamide, Mannich-Basen und der Aminaddukte (Epoxid-Amin-Addukte wie beispielsweise in der EP 0 387 418 A2 beschrieben, Isocyanat-Amin-Addukte [beispielsweise aus nicht umgesetzten Aminogruppen der Iminsynthese oder aus den oben genannten Aminolen - bei Verwendung der Aminole erfolgt bevorzugt zuerst die Umsetzung zum Imin und im Anschluss die Addition an das Isocyanat], Bucherer-Addukte und Michael-Additions-Addukte) ausgewählt sein.

Als Amine besonders interessant sind auch Aminoalkylsilane, die mindestens eine hydrolysierbare Gruppe, wie Alkoxy, z.B. Methoxy oder Ethoxy - am Silicium gebunden - beinhalten. Diese können (durch entstehendes Reaktionswasser oder zugeführtes Wasser) hydrolysieren und kondensieren und so Oligomere bilden, die mehrere Aminogruppen tragen und die REACH-Definition für Polymere erfüllen. Imine aus derartigen Aminoalkylsilanen bilden daher die Grundlage für besonders bevorzugte Verbindungen. Bevorzugte derartige Aminoalkylsilane sind beispielsweise ausgewählt aus der Gruppe, die eine oder mehrere der folgenden Verbindungen umfasst: Aminoalkyltri- oder -dialkoxysilane, wie 3-Aminopropyltrimethoxysilan oder 3-Aminopropyltriethoxysilan, und N-(Aminoalkyl)amino-alkyltri- oder -dialkoxysilane, wie N-(2-Aminoethyl)-3-aminopropyltrimethoxysilan oder N-(2-Aminoethyl)-3-aminopropylmethyldimethoxysilan, ferner Ureidoalkyltrimethoxysilane, wie 3-Ureidopropyltrimethoxysilan.

Weiterhin können als Polyamine aminosilanisierte Füllstoffe, die primäre Aminogruppen tragen, wie aminosilanbehandeltes Quarzmehl (z.B Silbond AST(R) der Fa. Quarzwerke GmbH), aminosilanbehandelte Kieselerde (z.B. Aktisil AM(R) von Hoffmann Mineral), oder aminosilan-behandelte pyrogene Kieselsäuren, verwendet werden.

Bei den als solche zugesetzten oder zur Synthese der Aldimine und/oder Ketimine verwendbaren bzw. geeigneten Aldehyden und Ketonen handelt es sich insbesondere um solche der Formel (VII) 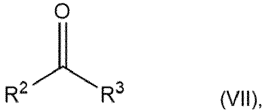 worin
R², R³ unabhängig voneinander Wasserstoff und/oder einen unsubstituierten oder substituierten und/oder einen gegebenenfalls Doppelbindungen und/oder Heteroatome aufweisenden ein- oder mehrfach verzweigten oder geradkettigen organischen Rest, welcher aliphatische, heteroaliphatische, alicyclische, heterocyclische Molekülstrukturen und/oder Kombinationen aus den vorgenannten Molekülstrukturen umfassen kann, bedeutet.

Bevorzugt handelt es sich bei den Aldehyden und/oder Ketonen um Verbindungen, welche mindestens ein oder mehrere (primäre und/oder sekundäre) Wasserstoffatom(e) am zur Carbonylgruppe alpha-ständigen Kohlenstoffatom aufweisen. Beispiele derartiger Aldehyde sind Propanal, Valeraldehyd, Isovaleraldehyd, oder Methoxyacetaldehyd, oder 3,7-Dimethyl-6-octenal (Citronellal) oder 3,7-Dimethyl-7-hydroxyoctanal (Hydroxycitronellal). Als derartige Ketone seien hier beispielhaft auch Methylisobutylketon, Aceton, Methylethylketon oder 6-Methyl-5-hepten-2-on erwähnt.

Besonders bevorzugt handelt es sich bei den Aldehyden und/oder Ketonen um Verbindungen, welche am zur Carbonylgruppe alpha-ständigen Kohlenstoffatom eine Doppelbindung und/oder Verzweigung aufweisen. Hierdurch weisen die besonders bevorzugten Aldehyde und/oder Ketone nur noch ein (tertiäres) Wasserstoffatom am zur Carbonylgruppe alpha-ständigen Kohlenstoffatom auf. Beispiele besonders bevorzugter Aldehyde sind Isobutyraldehyd, 2-Ethylhexanal, 2-Methylbutanal, 2-Ethylbutanal, 2-Methylvaleraldehyd, 2,3-Dimethyl-valeraldehyd, Cyclohexylcarboxaldehyd, oder 3,7-Dimethyl-2,6-octadienal (Citral), 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd oder Tetrahydro-pyran-3-carbaldehyd. Als besonders bevorzugte Ketone seien hier beispielhaft Diisopropylketon, 3-Methyl-2-pentanon, 2-Methylcyclohexanon oder betalonone genannt.

Die vorgenannten Beispiele für geeignete Amine, bevorzugte und besonders bevorzugte Aldehyde und/oder Ketone sollen den Umfang geeigneter Amine, Aldehyde und/oder Ketone nicht limitieren, sondern lediglich einige Beispielverbindungen mit den oben genannten, als geeignet, bevorzugt und als besonders bevorzugt definierten, Strukturmerkmalen zur Veranschaulichung aufzeigen.

Insbesondere bevorzugt sind auch die in den Beispielen genannten Aldehyde, Ketone bzw. synthetisierten Aldimine und/oder Ketimine und die als solche zugesetzten und/oder zur Synthese der Aldimine und/oder Ketimine verwendeten, spezifischen Amine, Ketone und Aldehyde, oder Gemische von zwei oder mehr davon.

### Mehrkomponenten-Reaktivharz-System

Ein weiterer Gegenstand der Erfindung ist die Verwendung von mindestens einer Tris-[(methacryloyloxy)-alkyl]-isocyanursäure als radikalisch härtbare Verbindung in einem Mehrkomponenten-Reaktivharz-System, bevorzugt in einem Zweikomponenten-Reaktivharz-System, für die chemische Befestigung von Verankerungsmitteln in Bohrlöchern oder zum baulichen Kleben. Das Mehrkomponenten-Reaktivharz-System umfasst dabei eine Reaktivharz-Zusammensetzung als Komponente (A), die die mindestens eine Tris-[(methacryloyloxy)-alkyl]-isocyanursäure enthält, und eine Härterkomponente (B).

Die Härterkomponente (B) enthält als Initiator ein Härtungsmittel (wie etwa ein Peroxid) für die mindestens eine Tris-[(methacryloyloxy)-alkyl]-isocyanursäure, mit dem bei Vermischen der Komponenten die Polymerisation in Gang gesetzt wird. Weiterhin kann die Härterkomponente Füllstoffe und/oder Additive enthalten, die bereits weiter oben beschrieben wurden.

Die Komponente (A) des Mehrkomponenten-Reaktivharz-Systems enthält erfindungsgemäß eine einige Tris-[(methacryloyloxy)-alkyl]-isocyanursäure oder eine Mischung aus zwei oder mehreren Tris-[(methacryloyloxy)-alkyl]-isocyanursäuren.

Besonders bevorzugt ist die Verwendung von einer einzigen Tris-[(methacryloyloxy)-alkyl]-isocyanursäure, insbesondere von Tris-[2-(methacryloyloxy)-ethyl]-isocyanursäure, als radikalisch härtbare Verbindung in einem Mehrkomponenten-Reaktivharz-System.

Insbesondere bevorzugt ist die Verwendung von einer einzigen Tris-[(methacryloyloxy)-alkyl]-isocyanursäure, insbesondere von Tris-[2-(methacryloyloxy)-ethyl]-isocyanursäure, als radikalisch härtbare Verbindung in einem Zweikomponenten-Reaktivharz-System.

Die Komponenten (A) und (B) werden bevorzugt in einem Verhältnis von Komponente (A) zu Komponente (B) von 10:1 bis 1:10 gemischt, besonders bevorzugt von 5:1 bis 1:5.

In einer besonders bevorzugten Ausführungsform sind die Bestandteile der Komponenten (A) und/oder (B) eines oder mehrere der Bestandteile, welche in den einzelnen erfindungsgemäßen Beispielen genannt werden. Ganz besonders bevorzugt sind Reaktivharz-Systeme, in welchen die Komponente (A) und optional auch die Komponente (B) dieselben Bestandteile enthält oder aus denselben Bestandteilen besteht, wie sie in den einzelnen erfindungsgemäßen Beispielen genannt werden, und zwar bevorzugt in den dort genannten Anteilen.

Die Komponenten (A) und (B) sind bis zur Verwendung des Mehrkomponenten-Reaktivharz-Systems räumlich getrennt voneinander verpackt, damit erst eine Reaktion stattfindet, wenn die beiden Komponenten miteinander in Kontakt gebracht werden.

Das Mehrkomponenten-Reaktivharz-System kann in Form eines Patronen-Systems, eines Kartuschen-Systems oder eines Folienbeutel-Systems vorliegen. Bei der bestimmungsgemäßen Verwendung des Reaktivharz-Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz-Systems beschickte Bohrloch eingebracht und entsprechend justiert werden.

Ein solches Reaktivharz-System findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet es sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen.

Insbesondere ist auch eine entsprechende Verwendung zur Erhöhung der Leistungsfähigkeit des ausgehärteten Reaktivharz-Systems bei erhöhten Temperaturen Gegenstand der vorliegenden Erfindung. Eine Erhöhung der Leistungsfähigkeit konnte erzielt werden gegenüber vergleichbaren Reaktivharz-Systemen aus dem Stand der Technik, die keine Tris-[(methacryloyloxy)-alkyl]-isocyanursäure enthielten.

Tris-[(methacryloyloxy)-alkyl]-isocyanursäuren können generell als Monomere für die Polymerisation eingesetzt werden, so dass ihre dementsprechende Verwendung einen weiteren Gegenstand der Erfindung darstellt. Insbesondere können Tris-[(methacryloyloxy)-alkyl]-isocyanursäuren als Monomere für die freie radikalische Polymerisation eingesetzt werden. Die Erfinder konnten überraschend zeigen, dass insbesondere Tris-[2-(methacryloyloxy)-ethyl]-isocyanursäure als Monomer für die Polymerisation, insbesondere die freie radikalische Polymerisation, eingesetzt werden kann.

Alle beschriebenen Ausführungsformen können im Rahmen der Erfindung miteinander kombiniert werden.

Die Erfindung wird im Folgenden anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### AUSFÜHRUNGSBEISPIELE

### Materialien und Methoden

Es wurden Reaktivharz-Zusammensetzungen, die erfindungsgemäß Tris-[2-(methacryloyloxy)-ethyl]-isocyanursäure als radikalisch härtbare Verbindung enthalten, und Vergleichs-Reaktivharz-Zusammensetzungen ohne Tris-[2-(methacryloyloxy)-ethyl]-isocyanursäure hergestellt. Die genaue Zusammensetzung der verwendeten Reaktivharz-Zusammensetzungen als Komponenten (A) sowie die verwendeten Härterkomponenten (B) können den weiter unten gezeigten Tabellen 2 und 3 entnommen werden.

In der folgenden Tabelle 1 findet sich eine Auflistung der Bestandteile, ihrer Handelsnamen und Bezugsquellen. Alle in dieser Tabelle 1 aufgelisteten Bestandteile der Zusammensetzungen sind - soweit nicht anders angegeben - kommerziell erhältlich und wurden in der kommerziell üblichen Qualität eingesetzt.

Als Härterkomponente (B) wurde jeweils die Härterkomponente des kommerziell verfügbaren Injektionsmörtels Hilti HIT-HY200-A (Hilti AG, FL-Schaan) verwendet. Diese Härterkomponenten enthalten Benzoylperoxid als Härtungsmittel, des Weiteren pyrogene Kieselsäure, weitere Füllstoffe und Wasser.

**Tabelle 1: Liste der in den Vergleichsbeispielen und erfindungsgemäßen Beispielen verwendeten Bestandteile (Erklärung der Abkürzungen) sowie ihrer Handelsnamen und Bezugsquellen**

| **Abkürzungen** | **Name** | **Handelsname** | **Bezugsquelle** |
|---|---|---|---|
| Komerate | Tris-[2-(methacryloyloxy)-ethyl]-isocyanursäure | Komerate T005MLQ | INCHEM GmbH, Deutschland |
| mUMA/HPMA 77/23 | Mischung von unverlängertem Urethanmethacrylat-Harz gemäß WO 2019/007667 mit HPMA im Mischungsverhältnis 77/23 | - | |
| Ecocryl^{®} 05345 | Bisphenol A diglycidylether dimethacrylat | Ecocryl^{®} 05345 | Momentive Specialty Chemicals B.V., Niederlande |
| SR 348L | Dimethacrylat des 2fach ethoxylierten Bisphenol-A | SR 348L | Arkema - Sartomer, Frankreich |
| HPMA | 2-Hydroxypropylmethacrylat | - | Itochu, Deutschland |
| BDDMA | 1,4-Butandioldimethacrylat | VISIOMER^{®} 1,4-BDDMA | Evonik Performance Materials, Deutschland |
| IBoMA | Isobornylmethacrylat | - | Sigma Aldrich, Deutschland |
| TMPTMA | Trimethylolpropantrimethacrylat | SR 350 | Arkema - Sartomer, Frankreich |
| TCDDMA | Tricyclo[5.2.1.0]decandi-methanol-dimethacrylat | SR 834 | Arkema - Sartomer, Frankreich |
| EGDMA | 1,2-Ethandioldimethacrylat | VISIOMER^{®} EGDMA | Evonik Performance Materials, Deutschland |
| DiPpT | Bis(hydroxypropyl)-p-toluidin | - | Saltigo, Deutschland |
| TBC | 4-tert-Butylbrenzcatechin | TBC OPTIMA 100% Flakes | Rhodia, Frankreich |
| Secar^{®} 80 | Zement | Secar^{®} 80 | Kerneos, Deutschland |
| Quarzsand F32 | Quarzsand | Quarzsand F32 | Quarzwerke, Deutschland |
| Silbond^{®} 600 MST | Quarzmehl behandelt mit Methacrylsilan | Silbond^{®} 600 MST | Quarzwerke, Deutschland |
| Millisil^{®} W6 | Quarzmehl, Durchschnittliche Partikelgröße d₅₀ = 40 µm | Millisil^{®} W6 | Quarzwerke, Deutschland |
| CabOSil^{®} TS 720 | Hydrophobe PDMSbeschichtete, pyrogene Kieselsäure | CabOSil^{®} TS 720 | Cabot Corporation, Deutschland |
| HY200-A Komponente B | BPO-basierte Härterzusammensetzung mit Wasser | - | HILTI AG, Liechtenstein |
| Perkadox^{®} 20S | Dibenzoylperoxid 20%, Gips enthaltende Zusammensetzung | Perkadox^{®} 20S | Akzo Nobel, Deutschland |
| BP-40-SAQ | Dibenzoylperoxid 40%, Suspension in Wasser, ungepuffert (CAS-Nummer 94-36-0) | BP-40-SAQ | United Initiators GmbH, Deutschland |
| Aerosil^{®} 200 | hydrophile, pyrogene Kieselsäure; (CAS Nummer: 112945-52-5; spez. Oberfläche 200m²/g; mittlere Teilchengröße 0,2-0,3 µm (Aggregate)) | Aerosil^{®} 200 | Evonik Resources Efficiency, Deutschland |
| KH₂PO₄ | Kaliumdihydrogenphosphat, wasserfrei | - | Merck, Deutschland |

Bei der vorliegenden Erfindung wurde die folgende analytische Methode verwendet.

### Auszugsversuche

Zur Bestimmung der Lastwerte der ausgehärteten Masse in Beton wurden Auszugsversuche unter R1 (24h, RT) und B3 (100°C oder 160°C) Bedingungen durchgeführt gemäß der Beschreibung der Leitlinie ETAG 001 Teil 5 (Leitlinie für die europäische technische Zulassung für Metalldübel zur Verankerung in Beton) ersetzt durch EAD 330499-00-0601. Für diese Versuche wurden hochfeste Ankergewindestangen (Größe M12) in ein bohrhammergebohrtes gereinigtes Bohrloch (2x Druckluft 6 bar, 2x Ausbürsten und 2x Druckluft 6 bar) mit einem Durchmesser von 14 mm und einer Bohrlochtiefe von 60 mm in Betonplatten (C20/25) mit der jeweiligen chemischen Mörtelmasse bei ca. 20°C eingedübelt. Nach einer Aushärtezeit von 24 Stunden bei Raumtemperatur wurden die Lastwerte in Auszugsversuchen unter R1 Bedingungen bestimmt. Für die Auszugsversuche unter B3 (100°C und 160°C) Bedingungen wurden die Betonplatten nach einer Aushärtezeit von 24 Stunden in einem Ofen bei der Zieltemperatur von 100°C bzw. 160°C für 48 Stunden temperiert. Im Anschluss wurden die Auszugsversuche bei der Zieltemperatur von 100°C bzw. 160°C durchgeführt.

Herstellung der Komponente A (Reaktivharz-Zusammensetzung) der Vergleichsbeispiele 1 - 3 und erfindungsgemäßen Beispiele 1 - 11

### Harzmischungen

In einem Kunststoffbecher wurden die Harze und Reaktivverdünner mit Beschleuniger (DiPpT) und Inhibitor gemischt und bis zur kompletten Auflösung der Feststoffe auf einem Magnetrührer für 24 Stunden bei 50°C gerührt. Die Harzmischung wurde dann auf Raumtemperatur gekühlt, bevor die Zugabe der Füllstoffe erfolgte.

### Komponente A

In einem Kunststoffbecher wurden die Füllstoffe und Verdicker zur Harzmischung zugegeben und von Hand mittels Holzspatel vorgerührt, bevor die Komponente A im Dissolver (Fa. PC Laborsystem, Volumen 1L) 8,5 min bei 3500 Upm und 80 mbar Unterdruck homogenisiert wurde.

### Komponente B

Als Härterkomponente (Komponente B) wurde jeweils die Härterkomponenten des kommerziell erhältlichen Prpodukts Hilti HIT HY 200 verwendet.

### Herstellung der Mörtel und Injektion in das Bohrloch

Die Komponenten A und B wurden für die Vergleichsbeispiele und die Beispiele 1 bis 10 in einem Mischungsverhältnis von 5:1 (Mischungsverhältnis A:B in Volumen (mL of A : mL of B)) und für das Beispiel 11 in einem Mischungsverhältnis von 10:1 (Mischungsverhältnis A:B in Volumen (mL of A : mL of B)) in eine Hartkartusche gefüllt.

Zur Injektion in das Bohrloch wurde ein statischer Mixer mit der Hartkartusche verbunden und der Mörtel mit Hilfe eines Dispensers dispensiert. Der Mörtel wurde erst nach dem Verwerfen der ersten drei Betätigungen des Abzugs injiziert, um eine vollständige Mischung der beiden Komponenten zu gewährleisten.

Die Ergebnisse in den Tabellen 2 und 3 zeigen, dass durch die erfindungsgemäße Verwendung von Tris-[2-(methacryloyloxy)-ethyl]-isocyanursäure als radikalisch härtbare Verbindung in der Komponente A eines Mehrkomponenten-Reaktivharz-Systems zur chemischen Befestigung von Verankerungselementen in Bohrlöchern die Versagensverbundspannung ähnliche Werte bei 22°C bzw. 100°C aufweist wie für die Referenz-Systeme. Bei einer weiter erhöhten Temperatur von 160°C konnte überraschenderweise sogar eine deutliche Verbesserung der Versagensverbundspannung gegenüber den Referenz-Systemen erzielt werden. Gleichzeitig konnte die Reaktivität des Reaktivharz-Systems bei Raumtemperatur aufrechterhalten werden.

**Tabelle 2: Zusammensetzung der Vergleichsbeispiele 1 bis 3 und der erfindungsgemäßen Beispiele 1 bis 6 und Ergebnisse der Messungen der Verbundspannung**

| | ***Vergleich* 1** | ***Vergleich 2*** | **Vergleich 3** | **Beispiel 1** | **Beispiel 2** | **Beispiel 3** | **Beispiel 4** | **Beispiel 5** | **Beispiel 6** |
|---|---|---|---|---|---|---|---|---|---|
| **Komponente A [Gew.-%]** | | | | | | | | | |
| Komerate | | | | 3,8 | 7,7 | 15,4 | 8,0 | 10,0 | 15,4 |
| mUMA/HPMA 77/23 | 20,0 | | | 15,0 | 10,0 | | | | |
| Ecocryl^{®} 05345 | | 20,0 | | | | | 10,0 | | |
| SR 348L | | | 20,0 | | | | | 10,0 | |
| HPMA | 3,5 | 3,5 | 3,5 | 4,7 | 5,8 | 8,1 | 3,5 | 3,5 | 3,7 |
| BDDMA | 12,5 | 12,5 | 12,5 | 12,5 | 12,5 | 12,5 | 14,5 | 12,5 | 12,5 |
| IBoMA | | | | | | | | | 4,4 |
| DiPpT | 0,9 | 0,9 | 0,9 | 0,9 | 0,9 | 0,9 | 0,9 | 0,9 | 0,9 |
| TBC | 0,1 | 0,1 | 0,1 | 0,1 | 0,1 | 0,1 | 0,1 | 0,1 | 0,1 |
| Secar^{®} 80 | 20,0 | 20,0 | 20,0 | 20,0 | 20,0 | 20,0 | 20,0 | 20,0 | 20,0 |
| Quarzsand F32 | 40,0 | 40,0 | 40,0 | 40,0 | 40,0 | 40,0 | 40,0 | 40,0 | 40,0 |
| CabOSil^{®} TS-720 | 3,0 | 3,0 | 3,0 | 3,0 | 3,0 | 3,0 | 3,0 | 3,0 | 3,0 |
| | | | | | | | | | |
| **Verbundspannung bei 22°C** [MPa] | 29,2 | | | | 30,3 | 29,4 | | | |
| **Verbundspannung bei 100°C** [MPa] | 20,4 | 21,9 | 20,4 | 22,4 | 23,1 | 23,8 | 23,3 | 22,3 | 25,0 |
| **Verbundspannung bei 160°C** [MPa] | 15,3 | | | | 20,1 | 21,0 | | | |

**Tabelle 3: Zusammensetzung der erfindungsgemäßen Beispiele 7 bis 11 und Ergebnisse der Messungen der Verbundspannung**

| **Komponente A [Gew.-%]** | **Beispiel 7** | **Beispiel 8** | **Beispiel 9** | **Beispiel 10** | **Beispiel 11** |
|---|---|---|---|---|---|
| Komerate | 15,4 | 15,4 | 15,4 | 12,5 | 15,4 |
| HPMA | 8,1 | 8,1 | 8,1 | 6,5 | 8,1 |
| BDDMA | | | | 10,1 | 12,5 |
| TMPTMA | 12,5 | | | | |
| TCDDMA | | 12,5 | | | |
| EGDMA | | | 12,5 | | |
| DiPpT | 0,9 | 0,9 | 0,9 | 0,7 | 0,9 |
| TBC | 0,1 | 0,1 | 0,1 | 0,1 | 0,1 |
| Secar^{®} 80 | 20,0 | 20,0 | 20,0 | 20,0 | 20,0 |
| Quarzsand F32 | 40,0 | 40,0 | 40,0 | 26,5 | 40,0 |
| Silbond^{®} 600 MST | | | | 20,6 | |
| CabOSil^{®} TS-720 | 3,0 | 3,0 | 3,0 | 3,0 | 3,0 |
| | | | | | |

| **Komponente B** | | | | | |
|---|---|---|---|---|---|
| HY200-A | 100,0 | 100,0 | 100,0 | 100,0 | |
| Perkadox^{®} 20S | | | | | 13,0 |
| BP-40-SAQ | | | | | 55,0 |
| Aerosil^{®} 200 | | | | | 0,75 |
| Millisil^{®} W6 | | | | | 31,0 |
| KH₂PO₄ | | | | | 0,25 |
| | | | | | |
| **Verbundspannung bei 22°C** [MPa] | 30,3 | | | 26,1 | |
| **Verbundspannung bei 100°C** [MPa] | 26,0 | 22,4 | 24,4 | 20,7 | 22,0 |
| **Verbundspannung bei 160°C** [MPa] | 23,9 | | | 21,2 | |

## Patentansprüche

1. Verwendung von mindestens einer Tris-[(methacryloyloxy)-alkyl]-isocyanursäure als radikalisch härtbare Verbindung in einer Reaktivharz-Zusammensetzung für die chemische Befestigung von Verankerungsmitteln in Bohrlöchern oder zum baulichen Kleben.

2. Verwendung nach Anspruch 1, wobei die Reaktivharz-Zusammensetzung mindestens eine weitere radikalisch härtbare Verbindung umfasst.

3. Verwendung nach Anspruch 2, wobei der Anteil der mindestens einen Tris-[(methacryloyloxy)-alkyl]-isocyanursäure mehr als etwa 20 Gew.-% und weniger als 100 Gew.-% bezogen auf die Summe aller radikalisch härtbaren Verbindungen in der Reaktivharz-Zusammensetzung beträgt.

4. Verwendung nach Anspruch 1, wobei die Reaktivharz-Zusammensetzung keine weitere radikalisch härtbare Verbindung umfasst.

5. Verwendung nach einem der Ansprüche 1 bis 4, wobei die Reaktivharz-Zusammensetzung zusätzlich mindestens einen Reaktivverdünner umfasst.

6. Verwendung nach einem der Ansprüche 1 bis 5, wobei die Reaktivharz-Zusammensetzung zusätzlich mindestens einen Inhibitor umfasst.

7. Verwendung nach einem der Ansprüche 1 bis 6, wobei die Reaktivharz-Zusammensetzung zusätzlich mindestens einen Beschleuniger umfasst.

8. Verwendung nach einem der Ansprüche 1 bis 7, wobei die Reaktivharz-Zusammensetzung zusätzlich Füllstoffe und/oder Additive umfasst.

9. Verwendung von mindestens einer Tris-[(methacryloyloxy)-alkyl]-isocyanursäure als radikalisch härtbare Verbindung in einem Mehrkomponenten-Reaktivharz-System für die chemische Befestigung von Verankerungsmitteln in Bohrlöchern oder zum baulichen Kleben, wobei das Mehrkomponenten-Reaktivharz-System eine Reaktivharz-Zusammensetzung, die die mindestens eine Tris-[(methacryloyloxy)-alkyl]-isocyanursäure enthält, als Komponente (A) und eine Härterkomponente (B) umfasst.

10. Verwendung nach einem der Ansprüche 1 bis 9 zur Erhöhung der Leistungsfähigkeit eines ausgehärteten Systems bei erhöhten Temperaturen.

11. Verwendung nach einem der Ansprüche 1 bis 10, wobei die mindestens eine Tris-[(methacryloyloxy)-alkyl]-isocyanursäure Tris-[2-(methacryloyloxy)-ethyl]-isocyanursäure ist.
